# EUROPÄISCHE PATENTSCHRIFT

(11) **EP 2 304 281 B1**
(45) Veröffentlichungstag und Bekanntmachung des Hinweises auf die Patenterteilung: **07.03.2012**
(21) Anmeldenummer: 09777213.1
(22) Anmeldetag: 15.07.2009
(51) Int. Cl.: F16J 15/34

(54) **GLEITRINGDICHTUNGSANORDNUNG MIT FILTERELEMENT**
SLIDE RING SEAL ARRANGEMENT HAVING FILTER ELEMENT
ENSEMBLE D ÉTANCHÉITÉ À ANNEAU GLISSANT AVEC ÉLÉMENT FILTRANT

(30) Priorität: 22.07.2008 DE 202008009842 U
(43) Veröffentlichungstag der Anmeldung: 06.04.2011
(73) Patentinhaber: EagleBurgmann Germany GmbH & Co. KG, 82515 Wolfratshausen (DE)
(72) Erfinder: FESL, Andreas, 82624 Otterfing (DE); DRÖSCHER, Peter, 82538 Geretsried (DE)
(74) Vertreter: Schaeberle, Steffen
(86) Internationale Anmeldenummer: PCT/EP2009/005150
(87) Internationale Veröffentlichungsnummer: WO 2010/009835

(56) Entgegenhaltungen:
- EP-A- 0 290 752
- DE-A1- 4 441 474
- JP-A- 9 324 737
- JP-A- 10 030 729
- US-A- 2 270 927
- US-A- 2 747 902
- US-A- 2 805 086
- US-A- 5 199 172

## Beschreibung

Die vorliegende Erfindung betrifft eine Gleitringdichtungsanordnung mit einem Filterelement, welches Schmutzablagerungen an einer dynamischen Nebendichtung der Gleitringdichtungsanordnung verhindert.

Gleitringdichtungsanordnungen mit Filterelementen, die Schmutzpartikel auffauzen, sind aus den Dokumenten US-A-2270927, US-A-2747902, EP-A-0290752, US-A-2805086, JP-A-10030729, und JP-A-09 324737 bekannt.

Gleitringdichtungsanordnungen sind aus dem Stand der Technik in unterschiedlichen Ausgestaltungen bekannt. Neben hohen Temperatur- und Druckbelastungen ist ein weiteres Problem, dass häufig das Medium, welches mittels der Gleitringdichtungsanordnung abgedichtet wird, nicht vollständig rein ist, sondern Schmutzpartikel aufweist.

Derartige Schmutzpartikel lagern sich besonders häufig an einer dynamischen Nebendichtung ab, welche axialen Ausgleichsbewegungen eines Gleitrings nachfolgen. Insbesondere sind dabei Ablagerungen auch auf einer Lauffläche der dynamischen Nebendichtung möglich. Derartige Schmutzablagerungen können dabei zu einem Verschleiß am hydraulischen Durchmesser, bzw. wenn eine Vorspannkraft über die dynamische Nebendichtung übertragen wird, zu einem Blockieren der Nebendichtung führen. Hierdurch kann es im schlechtesten Fall zu einem kompletten Ausfall der Gleitringdichtungsanordnung kommen.

Es ist daher Aufgabe der vorliegenden Erfindung, eine Gleitringdichtungsanordnung bereitzustellen, welche bei einfachem Aufbau und einfacher, kostengünstiger Herstellbarkeit Verschmutzungsprobleme, die zu einem Ausfall der Gleitringdichtungsanordnung führen können, vermeidet.

Diese Aufgabe wird durch eine Gleitringdichtungsanordnung mit den Merkmalen des Anspruchs 1 gelöst. Die Unteransprüche zeigen bevorzugte Weiterbildungen der Erfindung.

Die erfindungsgemäße Gleitringdichtungsanordnung mit den Merkmalen des Anspruchs 1 verhindert eine Ablagerung von Schmutzpartikeln, so dass eine Behinderung der Funktion der Gleitringdichtungsanordnung durch abgelagerte Schmutzpartikel vermieden werden kann. Erfindungsgemäß ist hierzu ein Filterelement vorgesehen, welches ringförmig ausgebildet ist und welches in einer Radialrichtung weiter außerhalb als ein Gehäuseabdichtbereich liegt. An diesem Gehäuseabdichtbereich dichtet eine dynamische Nebendichtung eine von einem Dichtspalt abgewandte Rückseite eines statischen Gleitrings ab. Der statische Gleitring ist dabei nicht rotierend (drehfest) ausgebildet und kann über eine Vorspanneinrichtung axial bewegt werden, um einen Dichtspalt zwischen dem stationären Gleitring und einem rotierenden Gleitring möglichst klein zu halten. Erfindungsgemäß wird insbesondere verhindert, dass sich Ablagerungen an der dynamischen Nebendichtung bilden, welche zu Undichtigkeiten der dynamischen Nebendichtung führen können und insbesondere eine Bewegung der dynamischen Nebendichtung in Axialrichtung verhindern können. Diese Bewegungsunfähigkeit in Axialrichtung, auch als "hang-up" bezeichnet, beeinträchtigt insbesondere eine Vorspannfunktion der Vorspanneinrichtung, wenn die Vorspannung über die dynamische Nebendichtung übertragen wird. Ferner wird vermieden, dass es zu einem unerwünschten Verschleiß am hydraulischen Durchmesser der dynamischen Nebendichtung aufgrund der Anlagerung von Schmutzpartikeln kommt. Die erfindungsgemäße Lösung durch das Vorsehen des ringförmigen Filterelements ermöglicht somit eine einfache und kostengünstige Verhinderung einer Ablagerung von Schmutzpartikeln an unerwünschten Stellen in der Gleitringdichtungsanordnung. Somit weist die erfindungsgemäße Gleitringdichtungsanordnung eine signifikant geringere Ausfallwahrscheinlichkeit und insbesondere auch eine erhöhte Lebensdauer auf. Somit kann die erfindungsgemäße Gleitringdichtungsanordnung auch bei verschmutzten Medien eingesetzt werden, ohne dass für die Gleitringdichtungsanordnung ein separater Sperrfluidkreislauf vorgesehen sein muss.

Um vorhandene Schmutzpartikel im Medium möglichst gut herausfiltern zu können und aufnehmen zu können, weist das ringförmige Filterelement eine radial nach innen gerichtete, umlaufende Vertiefung auf. Hierdurch können die Schmutzpartikel in der umlaufenden Vertiefung aufgenommen und gesammelt werden. Ferner bleibt hierbei selbst bei einer Ansammlung von einer größeren Menge von Schmutzpartikeln an den seitlichen Wandbereichen der Vertiefung immer noch genug freie Filterfläche, welche ein Durchströmen des Mediums durch das Filterelement sicherstellt. Vorzugsweise weist die Vertiefung im Schnitt eine U-förmige Gestalt auf.

Vorzugsweise umfasst die Vorspanneinrichtung einen Druckring, welcher eine Druckkraft über die dynamische Nebendichtung auf den stationären Gleitring überträgt. Besonders bevorzugt ist das Filterelement dabei an einer Seite an dem Druckring fixiert und an der anderen Seite an einem Gehäusebauteil fixiert.

Als Filterelement wird besonders bevorzugt ein Vlies verwendet, wobei das Vlies weiter bevorzugt eine Netzdichte zwischen 0,7 µm und 1,3 µm und noch bevorzugter eine Netzdichte von ca. 1 µm aufweist.

Vorzugsweise ist das Filterelement aus einem einstückigen Vlies hergestellt. Alternativ kann das Filterelement auch aus wenigstens zwei ringförmigen Vlieslagen, deren Flächen in Axialrichtung ausgerichtet sind, hergesellt werden, indem die wenigstens zwei Vlieslagen an einem Umfang, vorzugsweise einem inneren Umfang, miteinander verbunden sind. Besonders bevorzugt wird das Filterelement dabei aus genau vier Vlieslagen hergestellt und weist dann eine im Schnitt im Wesentlichen M-Form auf.

Besonders bevorzugt ist das Filterelement druckdurchlässig ausgebildet. D.h. ein Druck vor dem Filterelement entspricht einem Druck nach dem Filterelement. Hierdurch herrscht in dem Bereich vor und nach dem Filterelement ein gleicher Druck, so dass insbesondere eine einwandfreie Funktion der Nebendichtung sichergestellt werden kann.

Für eine einfache und schnelle Montage wird das Filterelement vorzugsweise mittels einer Klebeverbindung an seinen beiden in Axialrichtung freien Enden fixiert.

Die erfindungsgemäße Gleitringdichtungsanordnung wird besonders bevorzugt für gasförmige Medien verwendet und ist als gasgeschmierte Gleitringdichtungsanordnung ausgebildet. Beispielsweise kann die erfindungsgemäße Gleitringdichtungsanordnung bei Verdichtern für Erdgas o.ä. verwendet werden.

Nachfolgend werden bevorzugte Ausführungsbeispiele der Erfindung unter Bezugnahme auf die begleitende Zeichnung im Detail beschrieben. In der Zeichnung ist:
- Fig. 1: eine schematische Schnittansicht einer Gleitringdichtungsanordnung 1 gemäß einem ersten Ausführungsbeispiel der Erfindung, und
- Fig. 2: eine schematische Schnittansicht einer Gleitringdichtungsanordnung 2 gemäß einem zweiten Ausführungsbeispiel der Erfindung.

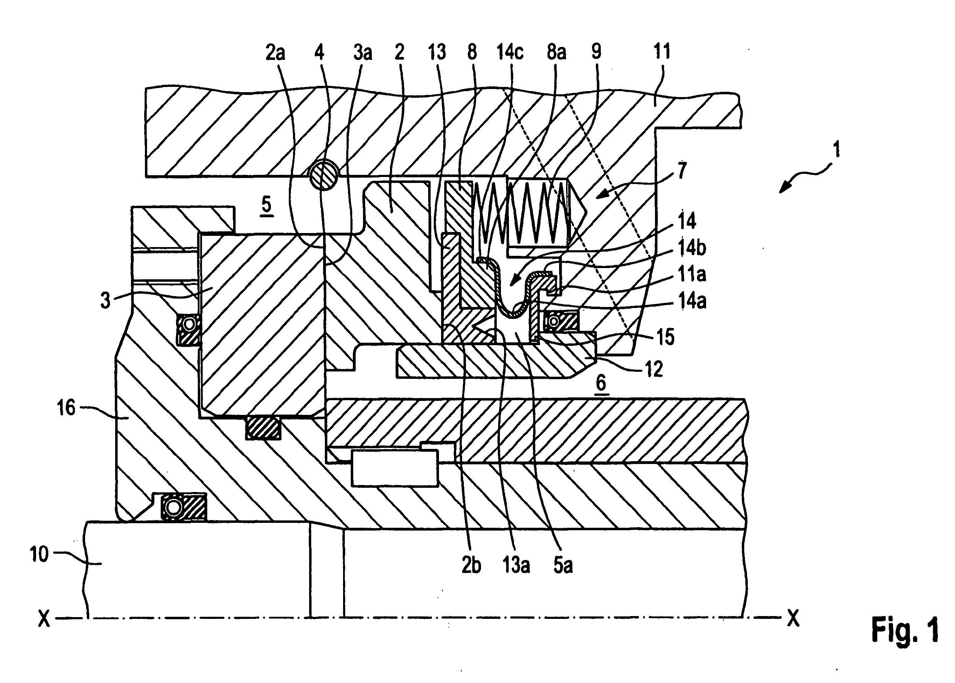

Nachfolgend wird unter Bezugnahme auf die Fig. 1 eine Gleitringdichtungsanordnung 1 gemäß einem ersten Ausführungsbeispiel der Erfindung beschrieben.

Wie aus Fig. 1 ersichtlich ist, umfasst die Gleitringdichtungsanordnung 1 einen ersten stationären Gleitring 2 und einen zweiten rotierenden Gleitring 3. Der rotierende Gleitring 3 ist über eine Hülse 16 mit einer Welle 10 verbunden und rotiert gemeinsam mit der Welle 10 und der Hülse 16 um eine Rotationsachse X-X. Die beiden Gleitringe 2 und 3 weisen einander gegenüberliegende Gleitflächen 2a, 3a auf, welche zwischen sich einen Dichtspalt 4 definieren.

Die Gleitringdichtungsanordnung 1 dichtet dabei zwischen einem ersten Raum 5 und einem zweiten Raum 6 an der rotierenden Welle 10 ab. In diesem Ausführungsbeispiel handelt es sich um eine gasgeschmierte Gleitringdichtungsanordnung, welche für eine Abdichtung eines gasförmigen Mediums, das im Raum 5 vorhanden ist, ausgelegt ist.

Ferner umfasst die Gleitringdichtungsanordnung 1 eine Vorspanneinrichtung 7 mit einem Druckring 8 und mehreren entlang des Umfangs verteilten Vorspannfedern 9. Die Vorspanneinrichtung 7 spannt dabei den stationären Gleitring 2 gegen den rotierenden Gleitring 3 vor. Hierbei sei angemerkt, dass der Begriff "stationär" derart zu verstehen ist, dass der zweite Gleitring 2 eine Bewegungsmöglichkeit in axialer Richtung aufgrund der auf ihn übertragenen Vorspannkraft der Vorspanneinrichtung 7 aufweist, um einen möglichst eng definierten Dichtspalt 4 zwischen den Gleitringen 2, 3 aufrechtzuerhalten. Im Vergleich zum rotierenden Gleitring ist der stationäre Gleitring 2 jedoch drehfest angeordnet.

Die Vorspannfedern 9 der Vorspanneinrichtung 7 sind in diesem Ausführungsbeispiel in Bohrungen im Gehäuse 11 angeordnet. Ferner ist am Gehäuse 11 ein hülsenförmiger Gehäuseabdichtbereich 12 angeordnet, an welchem der stationäre Gleitring 2 gelagert ist. Der Gehäuseabdichtbereich 12 ist als Hülse ausgebildet, welche vorzugsweise aus einem Wolfram-Karbid-Material hergestellt ist. Hierdurch wird eine hohe Beständigkeit gegenüber hohen Drücken des abzudichtenden Mediums erreicht. Ferner ist an diesem Gehäuseabdichtbereich 12 an einer Rückseite 2b des stationären Gleitrings 2, welche der Gleitfläche 2a in Axialrichtung entgegengesetzt liegt, eine dynamische Nebendichtung 13 angeordnet. Wie aus Fig. 1 ersichtlich ist, ist die dynamische Nebendichtung 13 dabei zwischen dem stationären Gleitring 2 und dem Druckring 8 angeordnet. Somit wird eine Vorspannkraft der Vorspanneinrichtung 7 über den Druckring 8 auf den stationären Gleitring 2 übertragen. Wie weiter aus Fig. 1 ersichtlich ist, weist die dynamische Nebendichtung im Schnitt eine L-Form auf und umfasst ferner an dem in Axialrichtung liegenden Schenkel einen V-förmigen Einschnitt 13a, der in Axialrichtung ausgerichtet ist.

Weiter umfasst die erfindungsgemäße Gleitringdichtungsanordnung 1 ein Filterelement 14, welches im Wesentlichen ringförmig ausgebildet ist und an einer radial weiter außen liegenden Position als der Gehäuseabdichtbereich 12 angeordnet ist. Das Filterelement 14 ist aus einem Vliesmaterial hergestellt und weist eine Porengröße von 1 µm auf. Wie aus Fig. 1 ersichtlich ist, weist das Filterelement 14 im Schnitt eine U-förmige Gestalt mit einer radial nach innen gerichteten Vertiefung 14a, einem ersten Fixierbereich 14b und einem zweiten Fixierbereich 14c auf. Wie aus Fig. 1 ersichtlich ist, ist das Filterelement 14 dabei an einem Absatz 8a des Druckrings 8 und einem am Gehäuse 11 befestigten Ringelement 15 befestigt. Die Befestigung des Filterelements 14 an den Fixierbereichen 14b, 14c erfolgt dabei vorzugsweise mittels einer Klebeverbindung. Wie aus Fig. 1 ersichtlich ist, trennt das Filterelement 14 dabei einen Bereich 5a vom ersten Raum 5 ab. Der Bereich 5a liegt dabei radial innerhalb des Filterelements 14 und insbesondere an einem Dichtbereich zwischen der dynamischen Nebendichtung 13 und dem Gehäuseabdichtbereich 12. Die umlaufende Vertiefung 14a des Filterelements 14 dient dabei zur Aufnahme und Sammlung von Schmutzpartikeln, welche in dem gasförmigen Medium enthalten sind.

Hierbei herrscht in Raum 5 und in Bereich 5a Druckgleichheit, da das Filterelement 14 druckdurchlässig ist. Somit können insbesondere auch Druckänderungen im Raum 5 verzögerungsfrei an den Bereich 5a nach dem Filterelement 14 weitergegeben werden. Somit beeinträchtigt das Filterelement 14 in keiner Weise die Funktion der Gleitringdichtungsanordnung. Somit kann eine Anpresskraft des stationären Gleitrings 2 gegen den rotierenden Gleitring 3 aufrecht erhalten werden.

Zur Fixierung des Ringelements 15 ist am Gehäuse 11 eine Hinterschneidung 11a ausgebildet, so dass das Ringelement 15 mittels eines Klipp-Vorgangs am Gehäuse 11 befestigbar ist.

Erfindungsgemäß kann somit verhindert werden, dass sich Schmutzpartikel insbesondere an dem Gehäuseabdichtbereich 12 ablagern, welche eine Behinderung einer freien Bewegung der Nebendichtung 13 und des stationären Gleitrings 2a in axialer Richtung bewirken könnte. Das Filterelement 14 stellt somit eine freie Befederung des stationären Gleitrings 2 sicher. Durch die im Schnitt U-förmige Gestalt des Filterelements 14 erfolgt ebenfalls keine Einschränkung einer Bewegungsfreiheit der Nebendichtung 13, da das Filterelement 14 in Axialrichtung eine Ausgleichsbewegung vollziehen kann.

Da das Filterelement 14 relativ nahe an dem Gehäuseabdichtbereich 12 angeordnet ist, wird ferner vermieden, dass beispielsweise eine Ablagerung durch erst im Bereich der Gleitringdichtungsanordnung anfallenden Partikel möglich ist. Das erfindungsgemäße Filterelement schränkt dabei die axiale Beweglichkeit der Gleitringdichtungsanordnung nicht ein und ist durch die Netzdichte von ca. 1 µm auch gasdurchlässig. Das Filterelement kann dabei neben Schmutzpartikeln selbstverständlich auch Flüssigkeitspartikel herausfiltern, welche ebenfalls zu Beeinträchtigungen im Bereich der Nebendichtung 13 führen könnten.

In diesem Ausführungsbeispiel wird das Filterelement 14 an den ersten und zweiten Fixierbereichen 14b, 14c mittels einer Klebeverbindung befestigt. Es sei angemerkt, dass alternativ das Filterelement beispielsweise auch durch Klemmen der Fixierbereiche 14b, 14c befestigt werden kann. Allerdings hat die Ausgestaltung mit der Klebeverbindung insbesondere zwischen dem ersten Fixierbereich 14b und dem Ringelement 15 den Vorteil, dass diese schon vor einer Montage der Gleitringdichtungsanordnung ausgeführt werden kann. Für die Montage der Gleitringdichtungsanordnung muss dann lediglich das Ringelement 15 über eine am Gehäuse 11 vorgesehene Hinterschneidung 11a geklipst werden.

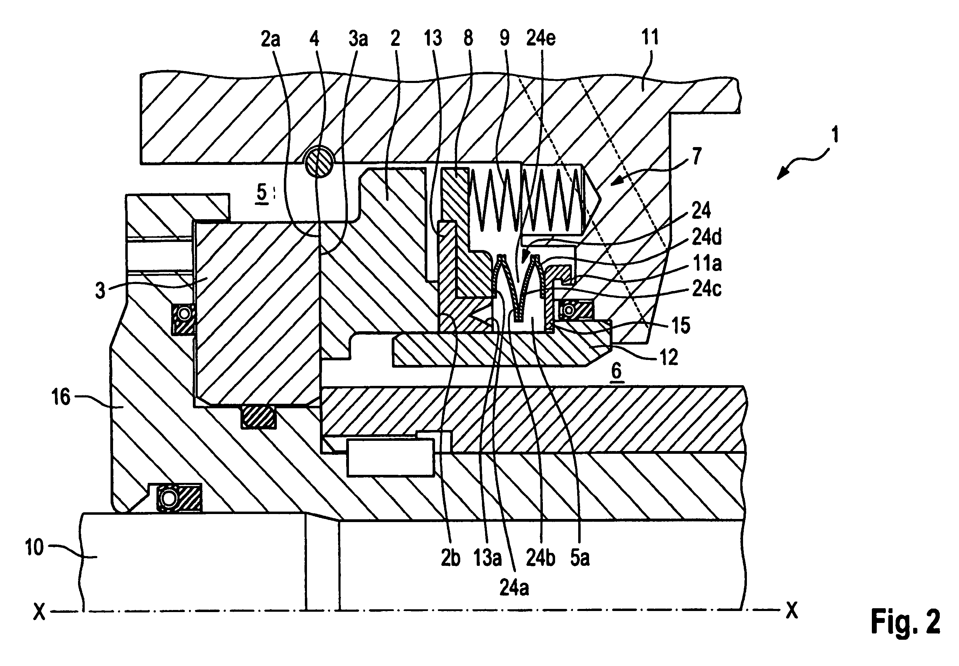

Nachfolgend wird unter Bezugnahme auf Fig. 2 eine Gleitringdichtungsanordnung 2 gemäß einem zweiten Ausführungsbeispiel der Erfindung beschrieben, wobei gleiche bzw. funktional gleiche Teile mit den gleichen Bezugszeichen wie im ersten Ausführungsbeispiel bezeichnet sind.

Die Gleitringdichtungsanordnung 2 entspricht im Wesentlichen dem ersten Ausführungsbeispiel, wobei im Unterschied dazu das Filterelement unterschiedlich ausgebildet ist. Im zweiten Ausführungsbeispiel ist das Filterelement mit dem Bezugszeichen 24 bezeichnet. Das Filterelement 24 ist dabei aus vier Vlieslagen 24a, 24b, 24c, 24d hergestellt. Hierbei dienen die beiden äußeren Vlieslagen 24a und 24d zur Fixierung des Filterelements und die beiden inneren Vlieslagen 24b und 24c bilden einen im Schnitt V-förmigen Sammelbereich, in welchem Schmutzpartikel und/oder Flüssigkeitstropfen gesammelt werden können. Die einzelnen Vlieslagen sind dabei jeweils mittels Kleben miteinander befestigt. Das Filterelement des zweiten Ausführungsbeispiels weist somit im Schnitt eine M-förmige Gestalt auf. Durch die Verbindung von benachbarten Vlieslagen jeweils an einem Randbereich erhält das Filterelement 24 des zweiten Ausführungsbeispiels dabei eine etwas versteiftere Gestalt, ohne dabei die axiale Beweglichkeit des Filterelements einzuschränken, so dass das Filterelement 24 des zweiten Ausführungsbeispiels sicher seine Form beibehalten kann. Ansonsten entspricht dieses Ausführungsbeispiel dem vorhergehenden Ausführungsbeispiel, so dass auf die dort gegebene Beschreibung verwiesen werden kann.

## Patentansprüche

1. Gleitringdichtungsanordnung, umfassend:
- einen ersten stationären Gleitring (2) mit einer ersten Gleitfläche (2a),
- einen zweiten rotierenden Gleitring (3) mit einer zweiten Gleitfläche (3a), wobei sich der rotierende Gleitring (3) gemeinsam mit einem rotierenden Bauteil (10) drehbar ist und wobei die Gleitflächen (2a, 3a) der Gleitringe (2, 3) einander gegenüberliegen und zwischen sich einen Dichtspalt (4) definieren,
- eine dynamische Nebendichtung (13), welche an einer dem Dichtspalt (4) abgewandten Seite (2b) des stationären Gleitrings (2) angeordnet ist und an einem Gehäuseabdichtbereich (12) abdichten kann,
- eine Vorspanneinrichtung (7), welche eine Vorspannung in axialer Richtung auf den stationären Gleitring (2) ausübt, und
- ein Filterelement (14; 24), welches im Wesentlichen ringförmig ausgebildet ist und welches in Radialrichtung weiter von einer Rotationsachse (X-X) als der Gehäuseabdichtbereich (12) angeordnet ist, um zu verhindern, dass sich Schmutzpartikel an der Nebendichtung (13) oder dem Gehäuseabdichtbereich (12) ablagern, **dadurch gekennzeichnet, dass** das Filterelement (14; 24) eine radial nach innen gerichtete, umlaufende Vertiefung (14a, 24e) umfasst, um Schmutzpartikel aufzunehmen.

2. Gleitringdichtungsanordnung nach Anspruch 1, **dadurch gekennzeichnet, dass** die Vorspanneinrichtung (7) einen Druckring (8) und eine Vielzahl von Federelementen (9) umfasst, wobei der Druckring (8) mit der Nebendichtung (13) in Kontakt steht und eine Vorspannkraft der Federelemente (9) über den Druckring (8) auf den stationären Gleitring (2) übertragbar ist.

3. Gleitringdichtungsanordnung nach Anspruch 2, **dadurch gekennzeichnet, dass** das Filterelement (14; 24) am Druckring (8) befestigt ist und an einem Gehäuse (11) oder einem mit dem Gehäuse verbundenen Bauteil (15) befestigt bar ist.

4. Gleitringdichtungsanordnung nach Anspruch 2 oder 3, **dadurch gekennzeichnet, dass** der Druckring (8) einen ringförmigen Absatz (8a) aufweist, an welchem das Filterelement (14) fixiert ist.

5. Gleitringdichtungsanordnung nach einem der vorhergehenden Ansprüche, **dadurch gekennzeichnet, dass** das Filterelement (14; 24) mittels einer Klebeverbindung befestigt ist.

6. Gleitringdichtungsanordnung nach einem der vorhergehenden Ansprüche, **dadurch gekennzeichnet, dass** das Filterelement ein Vlies oder ein textiles Netzwerkgebilde ist.

7. Gleitringdichtungsanordnung nach einem der Ansprüche 1 bis 5, **dadurch gekennzeichnet, dass** das Filterelement (14) ein Vlies mit einer Netzdichte zwischen 0,7 µm und 1,3 µm, bevorzugt 1 µm, ist.

8. Gleitringdichtungsanordnung nach Anspruch 6 oder 7, **dadurch gekennzeichnet, dass** das Filterelement (14) aus einem einstückigen Vlies hergestellt ist.

9. Gleitringdichtungsanordnung nach Anspruch 6 oder 7, **dadurch gekennzeichnet, dass** das Filterelement (14) aus wenigstens zwei Vlieslagen (24b, 24c) hergestellt ist, welche an einer umlaufenden Seitenkante miteinander verbunden sind.

10. Gleitringdichtungsanordnung nach Anspruch 9, **dadurch gekennzeichnet, dass** das Filterelement aus genau vier Vlieslagen hergestellt ist und im Schnitt eine M-förmige Gestalt aufweist, oder im Schnitt eine U-förmige Gestalt aufweist.

11. Gleitringdichtungsanordnung nach einem der vorhergehenden Ansprüche, **dadurch gekennzeichnet, dass** das Filterelement (14; 24) druckdurchlässig ist.

## Claims

1. A mechanical seal assembly, comprising:
- a first stationary seal ring (2) having a first sliding surface (2a),
- a second rotating seal ring (3) having a second sliding surface (3a), wherein the rotating seal ring (3) can be rotated together with a rotating component (10) and wherein the sliding surfaces (2a, 3a) of the seal rings (2, 3) are disposed opposite to each other and define a sealing gap (4) between them,
- a dynamic secondary seal (13) which is arranged at a side (2b) of the stationary seal ring (2) facing away from the sealing gap (4) and can seal at a housing sealing region (12),
- a pretensioning device (7) that applies a pretension onto the stationary seal ring (2) in an axial direction, and
- a filter member (14; 24) which substantially has a ring shape and which is arranged in the radial direction further away from a rotational axis (X-X) than the housing sealing region (12), in order to prevent dirt particles from depositing on the secondary seal (13) or the housing sealing region (12), **characterized in that** the filter member (14; 24) comprises a radially inwardly directed, circumferential recess (14a, 24e) for accumulating dirt particles.

2. The mechanical seal assembly of claim 1, **characterized in that** the pretensioning device (7) comprises a thrust ring (8) and a plurality of spring members (9), wherein the thrust ring (8) contacts the secondary seal (13) and a pretensioning force of the spring members (9) can be transmitted through the thrust ring (8) to the stationary seal ring (2).

3. The mechanical seal assembly of claim 2, **characterized in that** the filter member (14; 24) is attached at the thrust ring (8) and can be attached at a housing (11) or a component (15) connected to the housing.

4. The mechanical seal assembly of claim 2 or 3, **characterized in that** the thrust ring (8) has an annular shoulder (8a) at which the filter member (14) is fixed.

5. The mechanical seal assembly of one of the preceding claims, **characterized in that** the filter member (14; 24) is attached by means of an adhesive connection.

6. The mechanical seal assembly of one of the preceding claims, **characterized in that** the filter member is a non-woven fabric or a textile network.

7. The mechanical seal assembly of one of claims 1 to 5, **characterized in that** the filter member (14) is a non-woven fabric having a mesh density between 0.7 µm and 1.3 µm, preferably 1 µm.

8. The mechanical seal assembly of claim 7 or 8, **characterized in that** the filter member is formed of a one-piece non-woven fabric.

9. The mechanical seal assembly of claim 6 or 7, **characterized in that** the filter member (14) is made of at least two layers of non-woven fabric (24b, 24c) which are connected to each other at a circumferential lateral edge.

10. The mechanical seal assembly of claim 9, **characterized in that** the filter member is made of exactly four layers of non-woven fabric and has a M-shape in cross-section or has a U-shape in cross-section.

11. The mechanical seal assembly of one of the preceding claims, **characterized in that** the filter member (14; 24) is pressure-permeable.

## Revendications

1. Garniture mécanique d'étanchéité, comprenant
- un premier anneau de glissement stationnaire (2) ayant une première surface de glissement (2a),
- un deuxième anneau de glissement rotatif (3) ayant une deuxième surface de glissement (3a), l'anneau de glissement rotatif (3) étant rotatif conjointement avec une pièce rotative (10) et les surfaces de glissement (2a, 3a) des anneaux de glissement (2, 3) se faisant face et définissant entre elles une fente d'étanchéité (4),
- un joint d'étanchéité secondaire dynamique (13), qui est disposé sur un côté (2b), opposé à la fente d'étanchéité (4), de l'anneau de glissement stationnaire (2) et qui peut assurer l'étanchéité sur une zone d'étanchéité de carter (12),
- un dispositif de précontrainte (7), qui exerce sur l'anneau de glissement stationnaire (2) une précontrainte en direction axiale, et
- un élément filtrant (14 ; 24), qui est réalisé de forme essentiellement annulaire et qui, en direction radiale, est situé plus loin d'un axe de rotation (X-X) que la zone d'étanchéité de carter (12), afin d'empêcher que des particules d'impuretés se déposent sur le joint d'étanchéité secondaire (13) ou sur la zone d'étanchéité de carter (12),
**caractérisée en ce que** l'élément filtrant (14 ; 24) comprend un renfoncement périphérique (14a, 24e) dirigé radialement vers l'intérieur, pour recueillir les particules d'impuretés.

2. Garniture mécanique d'étanchéité selon la revendication 1, **caractérisée en ce que** le dispositif de précontrainte (7) comprend un anneau de pression (8) et une pluralité d'éléments de ressort (9), l'anneau de pression (8) étant en contact avec le joint d'étanchéité secondaire (13) et une force de précontrainte des éléments de ressort (9) pouvant être transmise par l'intermédiaire de l'anneau de pression (8) sur l'anneau de glissement stationnaire (2).

3. Garniture mécanique d'étanchéité selon la revendication 2, **caractérisée en ce que** l'élément filtrant (14 ; 24) est fixé à l'anneau de pression (8) et peut être fixé à un carter (11) ou à une pièce (15) reliée au carter.

4. Garniture mécanique d'étanchéité selon la revendication 2 ou 3, **caractérisée en ce que** l'anneau de pression (8) présente un gradin annulaire (8a) auquel est fixé l'élément filtrant (14).

5. Garniture mécanique d'étanchéité selon l'une des revendications précédentes, **caractérisée en ce que** l'élément filtrant (14 ; 24) est fixé au moyen d'une liaison par collage.

6. Garniture mécanique d'étanchéité selon l'une des revendications précédentes, **caractérisée en ce que** l'élément filtrant est un non-tissé ou une structure textile maillée.

7. Garniture mécanique d'étanchéité selon l'une des revendications 1 à 5, **caractérisée en ce que** l'élément filtrant (14) est un non-tissé ayant une taille de pores comprise entre 0,7 µm et 1,3 µm, de préférence égale à 1 µm.

8. Garniture mécanique d'étanchéité selon la revendication 6 ou 7, **caractérisée en ce que** l'élément filtrant (14) est fabriqué à partir d'un non-tissé d'un seul tenant.

9. Garniture mécanique d'étanchéité selon la revendication 6 ou 7, **caractérisée en ce que** l'élément filtrant (14) est fabriqué à partir d'au moins deux couches de non-tissé (24b, 24c) qui sont reliées entre elles sur un bord latéral périphérique.

10. Garniture mécanique d'étanchéité selon la revendication 9, **caractérisée en ce que** l'élément filtrant est fabriqué à partir d'exactement quatre couches de non-tissé et présente en coupe une forme de M ou une forme de U.

11. Garniture mécanique d'étanchéité selon l'une des revendications précédentes, **caractérisée en ce que** l'élément filtrant (14 ; 24) est perméable à la pression.
